# EUROPÄISCHE PATENTANMELDUNG

(11) **EP 1 055 924 A2**
(43) Veröffentlichungstag der Anmeldung: **29.11.2000**
(21) Anmeldenummer: 00109638.7
(22) Anmeldetag: 05.05.2000
(51) Int. Cl.: G01N 21/15

(54) **Oberflächenstruktur von Fenstern optischer Messgeräte**

(30) Priorität: 26.05.1999 DE 19924082
(71) Anmelder: SIEMENS AKTIENGESELLSCHAFT, 80333 München (DE)
(72) Erfinder: Meixner, Hans, Professor, 85540 Haar (DE); Strzoda, Rainer, 81825 München (DE)

(57) **Zusammenfassung**

Es wird durch Aufbringung einer vorgegebenen Oberflächenstruktur die Erzielung eines Selbstreinigungseffektes an Fenstern optischer Meßgeräte beschrieben. Die Oberflächenstruktur weist beispielsweise Pyramiden oder noppenförmige Erhebungen auf, deren Abmessungen derart ausgeführt sind, daß Schmutzpartikel sich lediglich auf den Spitzen der Erhebungen anlagern können. Ist das Material zudem hydrophob ausgebildet, so kann durch Wasser, das die Oberfläche nicht benetzt, ein Schmutzpartikel weggewaschen werden.

## Beschreibung

Die Erfindung betrifft eine auf der Oberfläche von Fenstern optischer Meßgeräte aufgebrachte Oberflächenstruktur zur Erzielung eines Selbstreinigungseffektes. Dies ist bei Meßgeräten wichtig, die im Freien betrieben werden oder beispielsweise mit partikelbeladenen Gasen beaufschlagt sind.

In der optischen Meßtechnik tritt regelmäßig das Problem der Verschmutzung von optischen Fenstern auf. Insbesondere bei Meßgeräten, die im Freien betrieben werden oder bei Meßgeräten für Abgase, beispielsweise Rauchgas oder Abgas eines Fahrzeuges, muß ein erheblicher Aufwand betrieben werden, um die Verschmutzungen der Fenster zu vermeiden. Sind diese Fenster von außen zugänglich, so können sie regelmäßig gereinigt werden. In den Fällen, die diese Möglichkeit ausschließen, beispielsweise ein Sensor im Abgastrakt eines Fahrzeuges, ist der Einsatz von optischen Sensoren bisher nicht möglich.

Neben der regelmäßigen Reinigung existiert im Stand der Technik auch die Möglichkeit, ein Meßfenster eines optischen Sensors mit einem Gasstrom zu spülen. Dies ist insbesondere bei der Messung an Rauchgasen, also den Gasen einer industriellen Feuerung, üblich.

Ein Selbstreinigungseffekt ist beispielsweise bei der Lotusblüte in der Natur bekannt. Dieser Effekt wurde in den letzten Jahren gezielt untersucht; Literaturstelle 1. Der hier beschriebene Reinigungseffekt beruht darauf, daß auf einer mikroskopisch rauhen Oberfläche die Athäsion von Partikeln reduziert wird. Rauh bedeutet in diesem Zusammenhang die Ausbildung von Pyramiden oder Noppen auf den Oberflächen mit Abmessungen im µm-Bereich. Darüber hinaus ist die Oberfläche hydrophob ausgelegt und wird somit von Wasser nicht benetzt. Wassertropfen auf der Oberfläche perlen ab und nehmen dabei die Schmutzpartikel auf, weil die Athäsion der Wasseroberfläche größer ist als die zur Blattoberfläche.

Der Effekt durch Ausbildung einer hydrophoben Oberfläche wurde bisher technisch auf Farbanstriche und auf Fahrzeugscheiben übertragen.

Der Erfindung liegt die Aufgabe zugrunde, Fenster von optischen Meßgeräten derart auszubilden, daß ihre verschmutzungsgefährdete Seite einen Selbstreinigungseffekt aufweist.

Die Lösung dieser Aufgabe geschieht durch die Merkmalskombination des Anspruches 1 bzw. des Anspruches 2.

Der Erfindung liegt die Erkenntnis zugrunde, daß Fenster optischer Meßgeräte sehr wohl eine Oberflächenstruktur aufweisen können. Sind die Abmessungen der Oberflächenstruktur kleiner als die Wellenlänge des hindurchtretenden Lichtes, so stört die oberflächliche Rauhigkeit die geradlinige Lichtausbreitung nicht. Liegen die Abmessungen der Oberflächenstruktur im Bereich der Wellenlänge des hindurchtretenden Lichtes oder darüber, so kann es zu Beeinflussungen der Lichtausbreitung durch ein strukturiertes Fenster kommen. Für diesen Fall sind innerhalb der Oberflächenstruktur der Fenster optische Elemente ausgebildet, die regelmäßige Strukturen aufweisen. Da hiermit bekannte optische Eigenschaften bezüglich Beugung oder Streuung vorliegen, lassen sich Abweichungen von der ungestörten Lichtausbreitung entsprechend berücksichtigen .

Je kleiner die Abmessungen der Oberflächenstrukturen sind, desto mehr Abstand besteht zur Größenordnung der Wellenlänge des hindurchtretenden Lichtes. Je größer dieser Abstand ist, desto weniger wird eine Oberflächenstruktur einen Einfluß auf die Lichtausbreitung nehmen. Somit liegt die untere Grenze der Abmessungen der Oberflächenstruktur unterhalb der Lichtwellenlänge und ist verbunden mit der Effektivität der Selbstreinigung. Die obere Grenze der Oberflächenstruktur liegt in der Praxis dort, wo Schmutzpartikel sich in den Tälern der Struktur festsetzen können. Für diesen Fall ist die Abmessung der Oberflächenstruktur bereits zu groß gewählt. Ideal ist die Abmessung der Oberflächenstruktur derart zu wählen, daß auf der Oberfläche eines Meßfensters anlagernde Schmutzpartikel auf den oberen Enden der Strukturelemente, das heißt der Pyramiden der Noppen oder auch eventuell ausgebildeter Nadeln aufliegen. Unter Noppen werden erhabene Strukturen mit einer abgerundeten Oberfläche verstanden. Damit ist die Kontaktfläche der Partikel zur Fensteroberfläche minimiert und es können nur geringe Haftkräfte auftreten. Daraus resultiert eine leichte Ablösbarkeit der Schmutzpartikel beispielsweise mit einem vorbeistreichenden Gasstrom. Ist die Oberfläche des Fensters zusätzlich hydrophob ausgebildet, so kann sich insbesondere Wasser nicht oder nur schwer auf der Oberfläche anlagern. Dies führt dazu, daß das von der Oberfläche abgewiesene Wasser die eventuell an der Oberfläche angelagerten Partikel wegschwemmt.

Eine vorteilhafte Ausgestaltung der Erfindung sieht den Einsatz von optischen Elementen vor, die durch ihre regelmäßige Form wie beispielsweise ein optisches Gitter oder eine Fresnelsche Linse innerhalb der Oberflächenstruktur dargestellt sind. Mittels dieser optischen Elemente können auch Oberflächenstrukturen verwendet werden, deren Strukturabmessungen nicht kleiner oder gleich der Wellenlänge des durch ein Fenster hindurchtretenden Lichtes sind.

Die Strukturabmessungen sollten eine Geometrie aufweisen, deren laterale wie vertikale Abmessungen ungefähr gleich sind. Das heißt, daß die Kantenlänge oder Diagonale einer Pyramide ungefähr ihrer Höhe entspricht. Der beschriebene Selbstreinigungseffekt wird immer dann eintreten, wenn Verunreinigungen sich nicht zwischen den Strukturen festsetzen können. Das Einsatzgebiet derartiger Sensoren mit entsprechenden Fenstern ist weitgefächert und betrifft beispielsweise den Einsatz in staubigen und rußhaltigen Atmosphären, beispielsweise Meßgeräte am Straßenrand, in Kaminen von Kraftwerken oder im Abgastrakt von Fahrzeugen. Vorteile einer derartigen Oberflächenstruktur zur Erzielung eines Selbstreinigungseffekts bestehen darin, daß eine gezielte Spülung dieser Oberflächen bzw. Fenster oder eine regelmäßige Reinigung entfallen kann. Andererseits wird der Einsatz von optischen Sensoren beispielsweise im unzugänglichen Abgasbereich eines Fahrzeuges durch die Erfindung erst ermöglicht, da eine regelmäßige Reinigung nicht durchführbar ist.

Da Oberflächen allgemein zu einer Streuung von Lichtstrahlen führen, kann in die zwei bereits erwähnten Fälle unterschieden werden, nämlich den, daß eine Oberflächenstruktur Abmessungen aufweist, die wesentlich kleiner als die Lichtwellenlänge sind und sie damit die hervorgerufene Streuung vernachlässigbar ist und den, daß die Abmessungen der Oberflächenstruktur im Wellenlängenbereich des Lichtes liegen und somit die Lichtausbreitung behindert oder beeinflußt wird. Im zweiten Fall kann Abhilfe dadurch geschaffen werden, daß die Oberfläche regelmäßig strukturiert wird. In diesem Fall tritt zwar Difraktion auf, die jedoch technisch beherrschbar ist und im Falle von monochromen Licht, wie es beispielsweise von einem Laser geliefert wird, ist lediglich eine Strahlablenkung zu verzeichnen, deren Größe berechenbar ist.

## Patentansprüche

1. Oberflächenstruktur von Fenstern optischer Meßgeräte, die zur Erzielung eines Selbstreinigungseffektes Strukturabmessungen von weniger als 1 µm aufweist.

2. Oberflächenstruktur von Fenstern optischer Meßgeräte, die zur Erzielung eines Selbstreinigungseffektes Strukturabmessungen von 1 µm bis 30 µm aufweist, wobei durch in der Oberflächenstruktur ausgebildete optische Elemente mit bekannter optischer Eigenschaft Abweichungen von der ungestörten Lichtausbreitung am Fenster eliminierbar sind.

3. Oberflächenstruktur nach Anspruch 2, wobei als optische Elemente ein regelmäßiges Gitter oder eine Fresnelsche Linse zum Einsatz kommt.

4. Oberflächenstruktur nach einem der vorhergehenden Ansprüche, wobei die Oberflächenstruktur durch Pyramiden oder noppenförmige Erhebungen oder einer Kombination daraus hergestellt ist.

5. Oberflächenstruktur nach einem der vorhergehenden Ansprüche, wobei die Fensteroberfläche zusätzlich hydrophob ausgebildet ist.
